# EUROPEAN PATENT APPLICATION

(11) **EP 2 237 263 A1**
(43) Date of publication of application: **06.10.2010**
(21) Application number: 10156804.6
(22) Date of filing: 17.03.2010
(51) Int. Cl.: G09G 5/00, H01R 13/641

(54) **Method and circuit for controlling HDMI related blocks' power in a sink device**

(30) Priority: 30.03.2009 TR 200902467
(71) Applicant: Vestel Elektronik Sanayi ve Ticaret A.S., 45030 Manisa (TR)
(72) Inventor: Çetin, Hüseyin Ertürk, 45030, Manisa (TR); Bal, Ertug, 45030, Manisa (TR)
(74) Representative: Cayli, Hülya

(57) **Abstract**

A power management method and system for sink devices having at least one HDMI port is enclosed. According to the invention; an external detection circuit detects the absence/presence of an HDMI source by monitoring the voltage level of pin 18 of each HDMI port, feed backs this detected data to a micro controller; if the voltage level of any of pin 18 is in high state, the micro controller turns up the power of the blocks that are related to said HDMI port by said microcontroller; if the voltage level of any of pin 18 is in low state, the micro controller turns down the power of the blocks that are related to said HDMI port by said microcontroller.

## Description

### Technical field

The present invention relates to power controlling methods and systems, more specifically to a method and circuit for controlling HDMI (High Definition Multimedia Interface) related blocks' power in a sink device.

### Prior art

HDMI (High Definition Multimedia Interface) port is an uncompressed fully-digital interface supported by many products nowadays and is used between an audio and video source such as set-top boxes, DVD players, A/V receivers and an audio- and/or video-playing device, such as a digital television, this interface providing the communication between such external devices and the system equipped with HDMI ports.

HDMI receiver ICs (integrated circuits) generally have inter-integrated circuit (I2C) controlled power-down modes in which they consume low but non-zero power, because IC keeps I2C block alive in order to wake up upon a comment from the microcontroller.

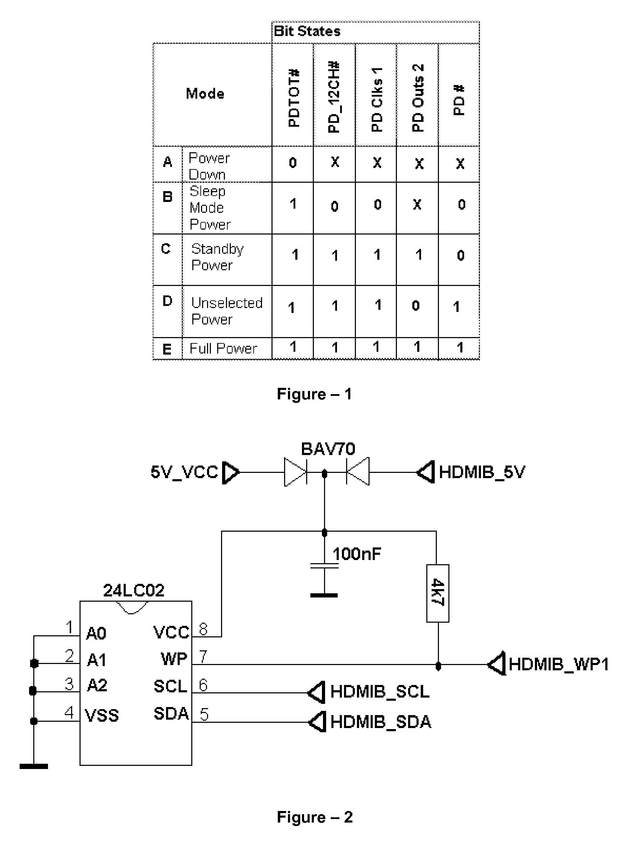

In figure 1, the power modes for such a system and the bit states at these power modes are given. According to this table, the description of each power mode is as follows;
(A) Power Down Mode: Minimum power. Everything is powered off. Host sees no termination of TMDS (transition-minimized differential signaling) signals at either TMDS port. I2C access is still available.
(B) Sleep Mode Power: Powers down as in mode C, but also powers down SCDT logic. CKDT state can be polled in register, but interrupts and the INT output pin are inactive. Host device can sense TMDS termination.
(C) Standby Power: Powers down core logic, ACR PLL and output pins. HDCP does not continue. Interrupts disabled. INT pin show state of SCDT for the selected TMDS port.
(D) Unselected Power: Monitor SCDT on selected TMDS port with outputs tri-stated. HDCP continues but the output of the receiver can be connected to a shared bus.
(E) Full power: Normal operating condition

Moreover, other HDMI related parts (like EDID [extended display identification data] eeproms, HDMI switches, and I2S [inter-integrated sound] audio DACs) are powered up continuously when TV is on even if the HDMI sources are not used. Figure 2 shows an eeprom powered unnecessarily while HDMI inputs are not present. In this figure, presently known sink devices are shown and as can be seen, the eeprom is powered by 5V_VCC or HDMI_5V whichever is present. When the TV is on and no HDMI source is active, then this eeprom will consume power via 5V_VCC line unnecessarily.

This unnecessary power consumption when HDMI input(s) are absent or not active also causes the reduction in lifetime of the HDMI related components due to this unused power.

Many approaches are available in the background art, aiming at reducing the energy consumption in the standby periods of such electronic devices. Whilst such approaches can reduce the energy consumption during the standby period there is still a certain degree of energy consumption.

To minimize the power consumption, some TMDS (transition-minimized differential signaling) receivers have power down modes. However, even in these modes they consume nonzero power unnecessarily when the related input(s) are not active. Some other HDMI-related parts even do not implement any power control, like audio DACs, HDMI switches, and eeproms.

In the published patent application US2006/0252184 there is disclosed a system in order to prevent this unnecessary power consumption. In this application, a semiconductor integrated circuit adapted to switching its operation mode according to the cable connection status for peripheral equipment and the operation status of an internal or external CPU is enclosed, in which system, a detection confirmation circuit sets the logical level of a second signal according to the logical level of a first signal observed after a lapse of a predetermined time since detection of insertion/removal of a cable for peripheral equipment. The semiconductor integrated circuit operates in a standby mode in which only the insertion/removal detection circuit operates if no cable for peripheral equipment is connected, in a repeater mode in which only a physical layer (PLY) operates if a cable for peripheral equipment is connected and CPU is in the suspended state, and in a normal mode in which both PRY and link layer (LINK) operate if a cable for peripheral equipment is connected and a CPU is in the operating state.

Published patent application US 2008/0180551 discloses an image pickup apparatus which operates in a normal power-consumption mode in the period after reception of an image transfer request command from a digital television set until completion of an operation for transferring still image data in accordance with the image-transfer request command, and operates in a low power-consumption mode in the period after the completion of the operation for transferring the still image data in accordance with the image-transfer request command until reception of another image-transfer request command from the digital television set.

However these and other power management approaches can not provide an efficient solution for controlling HDMI related blocks' power in a sink device.

### Object of the Invention

The object of the present invention is to prevent the unnecessary power consumption in a sink device by providing a method and circuit for controlling the power of the HDMI related blocks.

Another object of the invention is to prevent the reduction in lifetime of the HDMI related components by preventing the unnecessary power consumption when HDMI input(s) are absent or not active.

### Brief Description of the Drawings

**Figure 1** shows an example of an HDMI receiver power down modes as a table giving the power modes and the bit states accordingly.
**Figure 2** shows an example of an HDMI EDID eeprom powered unnecessarily (continuously when the TV is on) while HDMI inputs are not present
**Figure 3** shows the pin numbers of an HDMI port.
**Figure 4** shows a block diagram of an embodiment of the present invention
**Figure 5** shows a detailed block diagram of an embodiment of the present invention.

### Detailed Description of the Invention

The present invention relates to sink devices (like TV) having HDMI interface. It provides a power controlling method and circuit for detecting active HDMI input(s) and controlling the power supply of the related blocks (TMDS receiver, HDMI switch, EDID eeprom, audio DAC, etc.) accordingly.

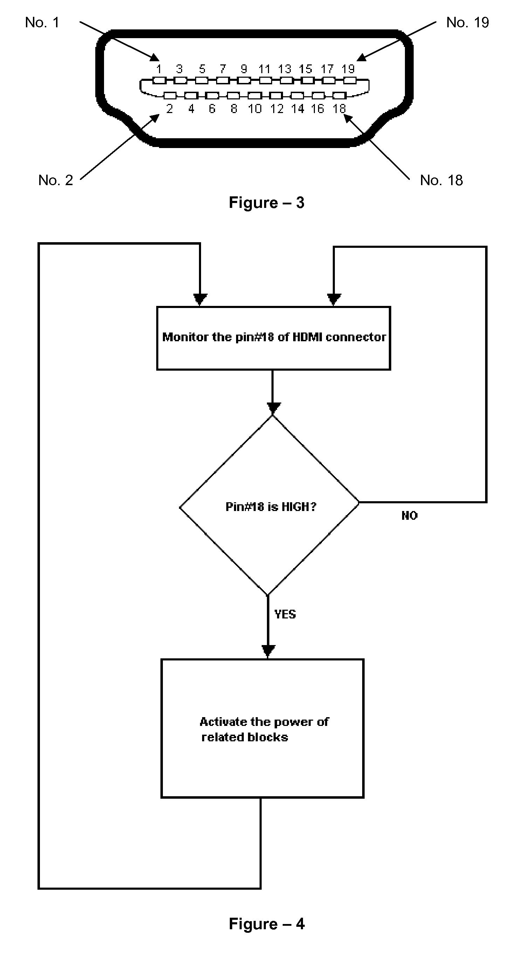

Figure 3 shows the pin numbers of an HDMI port. According to this figure, the description of each pin is as follows:

| | | | |
|---|---|---|---|
| Pin1: | TMDS Data2+ | Pin11: | TMDS Clock Shield |
| Pin2: | TMDS Data2 Shield | Pin12: | TMDS Clock- |
| Pin3: | TMDS Data2- | Pin13: | CEC |
| Pin4: | TMDS Data1+ | Pin14: | Reserved |
| Pin5: | TMDS Data1 Shield | Pin15: | SCL |
| Pin6: | TMDS Data1- | Pin16: | SDA |
| Pin7: | TMDS Data0+ | Pin17: | DDC/CEC Grounding |
| Pin8: | TMDS Data0 Shield | Pin18: | +5 Volt Power |
| Pin9: | TMDS Data0- | Pin19: | Hot plug Detract |
| Pin10: | TMDS Clock+ | | |

The communication between a source device and a sink device via an HDMI port is as follows:
Source device sends an active high (+5V) signal via the pin18 of the HDMI port.
Sink device sends an active high (+5V) signal called Hot Plug Detect (HPD) via the pin19.
Source device reads HDCP keys and EDID eeprom via I2C pins of the connector.
Source device sends TMDS (audio/video) data.

The power management system according to the present invention is based on an external circuit (detection circuit) which detects pin18 of each HDMI port and feedbacks this detected data to a microcontroller, which, in turn, controls the power of the related blocks. This microcontroller does not only apply to HDMI receiver ICs, but also applies to other ICs such as audio DACs, eeproms, and HDMI switches.

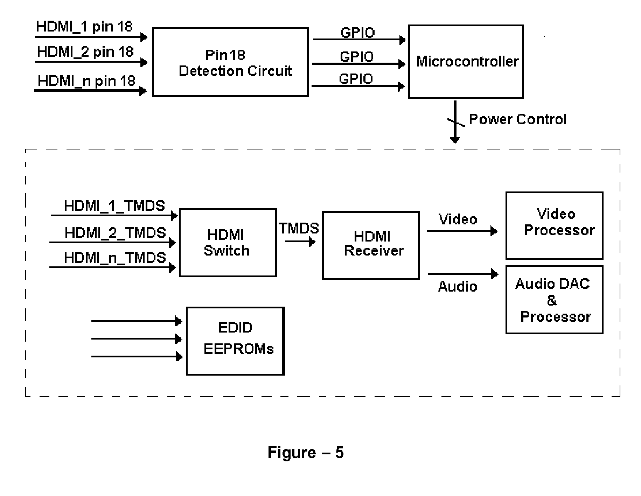

In figures 4 and 5, the flow diagram of the method according to an embodiment of the present invention can be seen. According to these flow diagrams, if there is no +5V present in the pin18, then there is no active HDMI source. The detection circuit detects this pin18 voltage and informs the microcontroller about the state of pin18, by sending a feedback signal to the microcontroller. The microcontroller turns down the power of the parts/blocks related to this connector according to said feedback signal. These parts can be EDID eeprom, HDMI switch, Audio I2S DAC, etc.

According to an embodiment of the invention, the detection circuit monitors the pin18s of the HDMI inputs and feedbacks the microcontroller via GPIOs (general-purpose input-output) or any other communication protocol. If any of the HDMI connector's pin18 (let's say nth connectors pin 18) is in the low state (the voltage detected on this pin is low), then the microcontroller turns down the power of the blocks related to that input. If it is high, microcontroller turns up the power of the blocks related to that input. Thus, zero power consumption is achieved for the HDMI-related blocks/ICs when the HDMI ports are not active.

This circuit and method can work for all sink devices, such as LCD / plasma televisions, having at least one HDMI input.

## Claims

1. A power management method for sink devices having at least one HDMI port, the method comprising;
- detecting the voltage level of each HDMI ports' pin 18 by an external detection circuit,
- feed backing this detected data to a micro controller;
- if the voltage level of any of pin 18 is in high state, turning up the power of the blocks that are related to said HDMI port by said microcontroller;
- if the voltage level of any of pin 18 is in low state, turning down the power of the blocks that are related to said HDMI port by said microcontroller.

2. A method according to claim 1, wherein said blocks are EDID eeprom, HDMI switch, Audio I2S DAC related to said HDMI port.

3. A method according to claim 1 wherein, the detection circuit feedbacks the detected data to the microcontroller via GPIOs.

4. A power management system for sink devices having at least one HDMI port, the system comprising;
- a detection circuit for detecting the voltage level of each HDMI ports' pin 18
- a micro controller for controlling the power of the related blocks such that;
• turning up the power of the blocks that are related to said HDMI port; if the voltage level of any of pin 18 is in high state,
• turning down the power of the blocks that are related to said HDMI port if the voltage level of any of pin 18 is in low state.

5. A system according to claim 4, wherein said blocks are EDID eeprom, HDMI switch, Audio I2S DAC related to said HDMI port.
